# DEMANDE DE BREVET EUROPEEN

(11) **EP 2 469 397 A1**
(43) Date de publication de la demande: **27.06.2012**
(21) Numéro de dépôt: 11194112.6
(22) Date de dépôt: 16.12.2011
(51) Int. Cl.: G06F 3/048

(54) **Traitement perfectionné de données d'interface graphique**

(30) Priorité: 21.12.2010 FR 1060979
(71) Demandeur: France Telecom, 75015 Paris (FR)
(72) Inventeur: Estrabaud, François, 78120 Rambouillet (FR); Temagoulte, Awataf, 75013 Paris (FR); Kaelbel, Maxime, 67100 Strasbourg (FR)
(74) Mandataire: Cabinet Plasseraud

(57) **Abrégé**

L'invention concerne le traitement de données d'interface graphique, mis en oeuvre par un dispositif informatique, dans lequel on génère un signal de commande d'affichage sur un écran d'une interface graphique à base de vignettes. Au moins une vignette représente un ensemble, d'au moins un contenu et/ou au moins une fonction informatique accessible à partir de cette vignette. Au sens de l'invention :
- toutes les vignettes (V1, ..., V9) d'un groupe de vignettes s'affichent ensemble sur l'écran, et
- la sélection d'une vignette d'un groupe pour un déplacement à l'écran provoque un déplacement des autres vignettes dudit groupe, dans un même sens de déplacement le long d'une trajectoire fermée.

## Description

La présente invention concerne un traitement de données d'interface de consultation de contenus et/ou de fonctions informatiques, pour un affichage sur écran, mis en oeuvre par un dispositif informatique.

Un tel dispositif informatique peut être typiquement, à titre d'exemple, un équipement de visualisation doté de fonctionnalités tactiles tel qu'un écran PC, une tablette PC, un téléphone mobile, ou autres. Par ailleurs, le dispositif peut ne pas inclure d'écran destiné à l'affichage de l'interface. Tel peut être le cas par exemple d'un terminal de type Set-Top-Box, connecté en revanche à un écran, par exemple d'un poste de télévision, susceptible d'afficher une interface graphique à disposition d'un utilisateur, lequel peut actionner par exemple des boutons d'une télécommande.

Les contenus et/ou de fonctions informatiques précités peuvent être, à titre d'exemple et sans aucune limitation, des fichiers de données, des instructions d'un programme informatique (pour l'exécution d'une application, d'un jeu, ou autres), des rubriques d'un menu, des contenus multimédias, des contenus audio et/ou vidéo, des contenus textuels, des contacts d'un carnet d'adresses, etc.

La mise en oeuvre d'une telle interface sur un écran consiste alors à afficher des vignettes correspondant à des contenus et/ou fonctions respectifs. On entend par « vignette » toute représentation possible d'un contenu ou d'une fonction informatique, telle que par exemple et à titre non limitatif une imagette représentative d'un contenu audio et/ou vidéo (pochette de disque, affiche de film, ou autre), un icone d'un programme, un logo, une forme quelconque contenant du texte, etc.

De tels équipements affichent aujourd'hui de nombreuses vignettes dans une même page d'écran et la lisibilité de la page d'affichage devient difficile. Des effets de représentation tridimensionnelle permettent d'atténuer cette difficulté. Par exemple, l'interface graphique « *cover flow »* (Société Apple®) présente l'équivalent de vignettes, avec en particulier :
- une vignette centrale, apparaissant de face en milieu d'écran, et
- deux successions de vignettes latérales, respectivement de part et d'autre de la vignette centrale, apparaissant de côté et en perspective.

Toutefois, ces vignettes sont finalement affichées sous forme de l'équivalent d'une liste comportant un élément central dont une vignette peut être affichée (par exemple la pochette d'un disque de musique avec des informations sur l'auteur et le titre) et des éléments précédent et suivant dans la liste.

Ainsi, un utilisateur connaissant les vignettes présentes dans un menu donné, recherche une vignette en faisant défiler les vignettes précédentes ou suivantes jusqu'à ce que la vignette recherchée occupe la position de l'élément central.

Toutefois, pour un utilisateur ne connaissant pas a priori le contenu d'un menu, un parcours complet du menu est parfois nécessaire pour accéder à une vignette recherchée (et, de là, à une rubrique désirée du menu). En outre, la recherche peut s'avérer infructueuse si la vignette recherchée n'est pas dans le menu parcouru.

On connait également des systèmes de navigations dans un ensemble de contenus, qui sont organisés de manière arborescente: il s'agit d'interfaces à bases de répertoires et fichiers que l'on trouve par exemple sous le système d'exploitation Windows XP ®.

Ainsi, accéder à une information, sans connaître le chemin à suivre dans une arborescence, ou sans avoir une idée précise de la nature même de l'information recherchée, est difficile. Des moteurs de recherche sont dans ce but mis à dispositions des utilisateurs, mais en sélectionnant un fichier trouvé suite à une telle recherche on retombe à nouveau dans une organisation arborescente. En outre, la hiérarchie des importances des informations reste difficile à gérer et chercher dans un menu une information nécessite encore de savoir comment la chercher.

La présente invention vient améliorer la situation.

Elle propose à cet effet un procédé de traitement de données d'interface graphique, mis en oeuvre par un dispositif informatique, dans lequel on génère un signal de commande d'affichage sur un écran d'une interface graphique à base de vignettes, au moins une vignette représentant un ensemble, d'au moins un contenu et/ou au moins une fonction informatique accessible à partir de ladite vignette. Dans le procédé au sens de l'invention :
- toutes les vignettes d'un groupe de vignettes s'affichent ensemble sur l'écran, et
- la sélection d'une vignette d'un groupe pour un déplacement à l'écran provoque un déplacement des autres vignettes dudit groupe, dans un même sens de déplacement le long d'une trajectoire fermée.

Ainsi, toutes les vignettes restent visibles à l'écran pour un utilisateur et, après un déplacement, un lien logique dans les positions relatives des vignettes est conservé (du fait du déplacement sur une trajectoire fermée), ce qui confère à un utilisateur un confort de navigation supplémentaire par rapport aux interfaces connues.

Cette trajectoire fermée peut être définie par une forme géométrique bidimensionnelle telle qu'un losange (carré ou rectangle), ou un cercle, ou une ellipse. Elle peut être définie aussi par un parcours sur une forme géométrique tridimensionnelle telle qu'une sphère, comme on le verra plus loin.

Dans une réalisation, les vignettes sont représentées dans un espace tridimensionnel et, selon la position occupée par une vignette dans cet espace tridimensionnel, le mode de représentation de cette vignette varie.

Ainsi, une telle réalisation offre une gestion avantageuse de la représentation d'une vignette et de la quantité d'informations que peut comporter cette vignette. La signification donnée à une vignette peut varier ainsi selon la position occupée : l'utilisateur peut choisir de donner de l'importance à certaines vignettes en les amenant dans une partie donnée de l'espace tridimensionnel. En particulier, lorsque cette position correspond à un avant-plan de l'espace tridimensionnel, la vignette subit non seulement un zoom lié à sa position en avant-plan et à l'effet tridimensionnel de la représentation, mais aussi une modification du mode de représentation : la quantité ou la nature des informations affichées sur l'ensemble associé à cette vignette, voire l'apparition de sous-vignettes, comme décrit dans des exemples de réalisation ci-après.

Ainsi, dans une telle réalisation, une variation du mode de représentation d'une vignette peut être obtenue en modifiant la quantité ou la nature des informations affichées sur l'ensemble associé à cette vignette.

Dans une réalisation, une variation du mode de représentation d'une vignette peut être obtenue en affichant des sous-vignettes de cette vignette, les sous-vignettes formant un autre groupe de vignettes de niveau hiérarchique inférieur au groupe d'appartenance de la vignette considérée.

On dispose ainsi d'un autre niveau d'information sur l'ensemble représenté par une vignette en faisant apparaître des sous-vignettes, représentant chacune un sous-ensemble de l'ensemble représenté par la vignette de départ. Il peut s'agir, par exemple, de sous-vignettes associées à des sous-rubriques respectives d'un menu, ces sous-rubriques étant d'un niveau d'arborescence inférieur au niveau de la rubrique représentée par la vignette de départ.

Plus une vignette est proche d'un avant-plan en représentation tridimensionnelle et plus la quantité des informations affichées sur l'ensemble associé à cette vignette augmente.

Dans une réalisation, ladite trajectoire est représentée dans un espace tridimensionnel et la position d'une vignette sur ladite trajectoire est d'autant plus proche d'un avant-plan dudit espace tridimensionnel que l'ensemble de cette vignette a un degré de pertinence plus élevé relativement à un critère choisi, qui peut par exemple être propre à un utilisateur.

En effet, ce critère peut être défini par l'utilisateur ou encore défini automatiquement par un module applicatif qui détecte les habitudes de l'utilisateur, ou autres. On peut ainsi décider de placer au premier plan les vignettes associées aux ensembles accédés le plus fréquemment, ou pour des périodes de temps plus longues, ou bien correspondant à des ensembles à caractère privé, ou au contraire professionnel, ou bien simplement à des ensembles favoris.

Dans une réalisation, la distance relative de deux vignettes sur la trajectoire est modifiable par un utilisateur. Avantageusement, la modification de cette distance induit une modification de la trajectoire et a donc un impact sur les possibilités d'actions sur cette vignette. On peut rendre deux vignettes proches, sur la trajectoire précitée, et donc conférer aux deux vignettes un degré d'accessibilité ou un degré de pertinence sensiblement identique.

En outre, les vignettes proches sont aisément reconnues et détectées visuellement par l'utilisateur. L'utilisateur peut donc se servir de cette possibilité pour regrouper visuellement certaines vignettes d'un même niveau hiérarchique. La distance relative entre deux vignettes prend donc une signification nouvelle et va au-delà d'un simple choix de représentation : cette distance est par exemple en rapport avec le degré de similarité ― perçu ou défini par l'utilisateur - du contenu et/ou des fonctions associées à ces vignettes. On facilite donc de manière intuitive la navigation et l'accès aux vignettes.

Dans une réalisation particulière, en réponse à une action prédéfinie d'un utilisateur, la définition de l'ensemble d'une vignette est modifiée, par ajout ou suppression d'au moins un contenu et/ou d'une fonction provenant d'un ensemble représenté par une autre vignette.

En particulier, par exemple par rapprochement d'une sous-vignette à une vignette d'un niveau d'arborescence supérieur, on peut assigner à la sous-rubrique représentée par la sous-vignette une position de menu d'un niveau d'arborescence supérieur. Ainsi, l'utilisation de l'interface et la possibilité de déplacer les vignettes offre à un utilisateur la possibilité de modifier l'arborescence d'un menu.

Dans une réalisation, le procédé comprend une étape de recherche de contenus répondant à un critère et une étape de création et d'affichage d'une vignette représentant un ensemble de contenus, obtenu suite à ladite étape de recherche. L'utilisateur peut ainsi constituer facilement des ensembles qui l'intéressent et naviguer dans ces ensembles au moyen de la vignette qui représente un de ces ensembles. Ici encore, l'utilisateur peut personnaliser la représentation de manière à naviguer plus facilement et plus rapidement dans les contenus qui l'intéressent.

Dans une réalisation, le procédé comprend une étape de recherche de contenus répondant à un critère de recherche. En particulier, les vignettes du groupe représentent un ensemble de contenus obtenu suite à l'étape de recherche. La trajectoire précitée est représentée dans un espace tridimensionnel et la position d'une vignette sur cette trajectoire est d'autant plus proche en avant-plan de l'espace tridimensionnel que l'ensemble d'au moins un contenu que cette vignette représente a un degré de pertinence plus élevé relativement au critère de recherche.

L'utilisateur est donc incité à accéder en premier lieu aux contenus accessibles via les vignettes en avant-plan, c'est-à-dire aux contenus les plus pertinents selon la recherche. La position dans l'espace sert donc à indiquer le degré de pertinence d'un contenu.

Dans une réalisation, en réponse à une action d'un utilisateur, au moins deux vignettes sont transformées en une vignette unique, appartenant au groupe de vignettes ou à un autre groupe de vignettes et les ensembles associés à ces deux vignettes sont fusionnés.

Une telle réalisation peut être menée typiquement par déplacement d'au moins une des deux vignettes, par exemple, par rapprochement de vignettes en cassant les liens existant. Par exemple, les deux vignettes peuvent être des vignettes appartenant à des groupes de vignettes différents et/ou des niveaux hiérarchiques différents.

Dans une réalisation, en réponse à une action prédéfinie d'un utilisateur, au moins une vignette, associée à un ensemble prédéfini d'au moins un contenu et/ou au moins une fonction informatique, est affichée et insérée dans un groupe de vignette couramment affiché.

Ainsi, indépendamment de l'organisation des vignettes en groupe, l'utilisateur peut avoir accès très rapidement, et sans avoir à naviguer à travers les vignettes, à des contenus ou fonctions particulières, par exemple des contenus et/ou fonctions, d'usages fréquents.

Dans une réalisation, la trajectoire précitée peut être définie dans un espace tridimensionnel représenté dans l'interface graphique, et la taille d'une vignette est modifiable (par l'utilisateur et/ou encore un module applicatif), indépendamment de sa position dans l'espace tridimensionnel.

Il est possible alors de rendre la vignette visible et facilement accessible, quelle que soit sa position sur la trajectoire et/ou dans l'espace tridimensionnel, tel un « raccourci » d'accès à cette vignette.

Une telle réalisation permet de mettre en évidence une vignette dans un groupe en lui appliquant une taille spécifique (par exemple plus grande) par rapport aux autres vignettes, notamment par rapport aux vignettes d'un même niveau hiérarchique. La mise en évidence de la vignette avec une taille spécifique, indépendamment de sa position dans la trajectoire ou dans l'espace tridimensionnel, facilite son identification, ce qui permet d'y accéder plus aisément. En outre, on améliore ainsi la visibilité des informations affichées et associées à la vignette.

On comprendra ainsi que la mise en évidence d'une vignette suivant cette réalisation permet de conférer une importance relative à la vignette d'un groupe afin de, par exemple, la rendre toujours visible et de taille suffisante, indépendamment des déplacements initiés par l'utilisateur sur le groupe de vignettes.

En outre, un tel agrandissement d'une vignette par l'utilisateur peut avantageusement provoquer l'apparition ou l'agrandissement de vignettes d'un niveau d'arborescence inférieur afin de présenter les informations d'une vignette à laquelle l'utilisateur a conféré de l'importance en agrandissant sa taille.

Dans une réalisation, la nature ou la quantité des actions possibles sur une vignette est fonction de sa taille. On optimise ainsi l'interface utilisateur en donnant par exemple une importance relative à certaines vignettes sur lesquelles les actions seront plus nombreuses.

Dans une réalisation, la représentation d'une vignette (son « image ») est modifiable, par exemple par un utilisateur ou par une application, la nature ou la quantité des actions possibles sur une vignette étant lié au type de représentation choisie. On personnalise ainsi l'interface utilisateur en définissant les types d'actions qui intéressent un utilisateur pour une vignette donnée. L'image choisie peut alors être représentative pour l'utilisateur des actions invocables.

Dans une forme de réalisation, l'utilisateur peut lui-même personnaliser l'apparence d'une vignette de manière à ce que sa forme soit plus explicite pour lui (par exemple, par le choix d'une image associée, d'un avatar, d'une représentation plus ou moins concrète ou plus ou moins abstraite). Dans une autre forme de réalisation, l'apparence d'une vignette peut être modifiée par un module applicatif en fonction d'au moins un critère déterminé.

Par exemple, on peut ainsi disposer d'une première liste d'actions invocables pour une gestion locale de contenus multimédia (lire, copier, supprimer le contenu) et une deuxième liste d'actions pour un partage de ces mêmes contenus via un réseau social (partager, publier un contenu, ou autres).

Dans un autre exemple de domaines tels que la gestion et/ou la finance impliquant un traitement de contenus sous forme de formulaires, on peut disposer d'une première liste d'actions correspondant à l'édition des formulaires (lire, supprimer, copie ou éditer un formulaire) et une deuxième liste d'actions pour échanger ou recevoir des formulaires (effectuer une demande de formulaire, envoyer un formulaire, etc.).

Dans ces deux exemples, la liste d'actions proposées est choisie en fonction du contexte applicatif dans lequel se trouve l'utilisateur ou résulte d'une demande de l'utilisateur.

Les mêmes contenus (formulaires, texte ou multimédia) et/ou fonctions informatiques peuvent aussi être accessibles via des modules et/ou applications logicielles différentes. La taille notamment, et/ou l'image formant la vignette, peuvent être fonction de l'application et/ou du module applicatif actif à un instant donné.

Dans une réalisation, toutes les vignettes du groupe restent affichées à l'écran après les déplacements de vignettes. On peut accéder ainsi à toutes les vignettes disponibles pour un niveau donné d'arborescence d'un menu, l'utilisateur pouvant suivre par exemple l'évolution sur une même page d'écran de toutes les vignettes associées respectivement à toutes les rubriques de ce niveau d'arborescence.

Dans une réalisation, la trajectoire étant définie dans un espace tridimensionnel représenté dans l'interface graphique, un ensemble correspondant à une vignette est accessible uniquement pour une vignette qui est placée dans un avant-plan dudit espace tridimensionnel.

L'utilisateur peut alors contrôler l'accessibilité d'une vignette en demandant le déplacement de cette vignette le long de la trajectoire.

Dans une réalisation, chaque vignette occupe, après déplacement, la position précédemment occupée par une vignette voisine, selon une permutation circulaire le long de la trajectoire fermée. Une telle permutation circulaire confère avantageusement un caractère intuitif à la navigation dès lors que l'utilisateur peut facilement identifier une nouvelle position d'une vignette suite à un déplacement.

Dans une réalisation, les vignettes occupent à l'écran des positions respectives le long de cette trajectoire fermée, selon un ordre prédéterminé.

Avantageusement, cet ordre prédéterminé définit alors un lien logique dans les positions relatives des vignettes.

Dans une réalisation, les positions relatives des vignettes sont ordonnées selon un critère de tri prédéterminé.

Ce critère de tri peut correspondre à un ordre présumé de pertinence des contenus (ou des fonctions informatiques), pour un utilisateur. Par exemple, les vignettes peuvent être disposées par ordre croissant en fonction d'un nombre de consultations des contenus correspondant, par l'utilisateur. En outre, l'utilisateur peut lui-même décider de modifier la position d'une ou plusieurs vignettes selon un choix personnel.

Ainsi, dans une telle réalisation, sur choix de l'utilisateur, une commande de modification d'ordre dans le groupe de vignettes peut provoquer le déplacement d'une vignette sélectionnée indépendamment d'une partie au moins des autres vignettes du groupe, par exemple pour l'ajout d'une vignette à groupe ou la suppression d'une vignette de ce groupe, ou simplement pour intervertir deux vignettes d'un groupe.

Dans une réalisation, le procédé comporte en outre un traitement de données graphiques des vignettes pour appliquer un effet tridimensionnel en mettant en avant une partie des vignettes et en retrait une autre partie des vignettes, les mises en avant et en retrait étant décidées, selon le critère de tri prédéterminé, notamment avant un déplacement éventuel des vignettes.

Ainsi, en mettant en avant des vignettes d'un groupe (par exemple celles dont les contenus où les fonctions informatiques sont les plus pertinents selon le critère précité), l'attention de l'utilisateur est naturellement attirée sur ces vignettes, ce qui lui procure encore un confort d'utilisation. Lors de l'affichage d'une page d'écran comportant des vignettes, ces dernières peuvent donc être positionnées en 3D a priori par ordre de pertinence selon le critère précité. En outre, si de telles vignettes représentent des rubriques respectives d'un menu, sur commande d'un utilisateur pour l'affichage de vignettes associées à de sous-rubriques d'une rubrique, des vignettes associées respectivement à ces sous-rubriques s'affichent à des positions en 3D choisies aussi par ordre de pertinence selon un critère choisi.

Ainsi, dans une réalisation où les vignettes correspondent à des rubriques de menu, les vignettes d'un même groupe peuvent alors correspondre à toutes les rubriques d'un même niveau d'arborescence du menu.

En outre, la sélection d'une vignette pour une consultation de sous-rubriques d'un niveau d'arborescence inférieur du menu, peut avantageusement provoquer l'affichage de toutes les vignettes associées respectivement à ces sous-rubriques, et la sélection pour un déplacement d'une vignette associée à une sous-rubrique provoque un déplacement des autres vignettes associées aux sous-rubriques le long d'une trajectoire fermée.

Dans une réalisation particulière, le procédé comporte un traitement de données graphiques des vignettes pour appliquer un effet tridimensionnel du type précité et en particulier suivant lequel les vignettes sont réparties sur un cercle de sphère inscrit dans un plan non parallèle à un plan de l'écran. Le déplacement d'une vignette sélectionnée provoque alors le déplacement des autres vignettes du groupe dans le même sens de déplacement sur le cercle et chaque vignette occupe la position d'une vignette voisine dans le sens du déplacement selon une permutation circulaire. Dans une telle réalisation, le traitement de données précité applique un niveau de détail d'affichage d'une vignette qui est fonction d'un degré d'éloignement apparent dans un espace tridimensionnel. Dans un exemple de réalisation, les vignettes les plus « lointaines » selon cet effet d'éloignement peuvent correspondre alors à des contenus, rubriques ou fonctions informatiques qui sont les moins pertinents selon un critère choisi.

On comprendra alors que le mouvement circulaire des vignettes, avec un effet 3D, suggère une révolution de planètes autour d'un astre. Dans des exemples de réalisation qui seront décrits en détail ci-après, cette analogie est exploitée (avec par exemple une représentation des vignettes par des sphères) pour conférer à l'utilisateur une interface intuitive et améliorant ainsi son confort.

On peut alors profiter d'une telle représentation avec cet effet 3D pour permettre à un utilisateur d'appliquer par exemple une rotation d'une vignette (représentée par une forme de planète) pour afficher sur sa face précédemment cachée des informations supplémentaires.

Plus généralement, dans une réalisation particulière, le procédé peut alors comporter un traitement de données graphiques des vignettes pour simuler un retournement d'une vignette dans l'espace, sur commande d'un utilisateur, et afficher des données supplémentaires sur une face retournée de la vignette.

La présente invention vise aussi un programme d'ordinateur comportant des instructions pour la mise en oeuvre du procédé ci-avant, lorsque ce programme est exécuté par un processeur.

La présente invention vise aussi un dispositif de traitement de données d'interface graphique pour la mise en oeuvre de l'invention, et comportant des moyens pour générer un signal de commande d'affichage sur un écran de vignettes correspondant à des contenus et/ou fonctions informatiques respectifs, et des moyens de traitement graphique pour :
- afficher ensemble sur l'écran toutes les vignettes d'un groupe de vignettes, et
- sur sélection d'une vignette d'un groupe pour un déplacement à l'écran, provoquer un déplacement des autres vignettes dudit groupe, dans un même sens de déplacement le long d'une trajectoire fermée.

D'autres caractéristiques et avantages de l'invention apparaîtront à l'examen de la description détaillée ci-après, et des dessins annexés sur lesquels :
- la figure 1 illustre un exemple de répartition de vignettes dans l'affichage d'une interface de consultation de contenus au sens de l'invention,
- la figure 2 illustre un déplacement dans un sens antihoraire des vignettes de la figure 1,
- la figure 3 illustre un déplacement dans un sens horaire des vignettes de la figure 1,
- la figure 4 illustre l'affichage de vignettes correspondant à des rubriques d'un niveau d'arborescence donné d'un menu, ainsi que l'affichage de vignettes correspondant à des sous-rubriques d'un niveau d'arborescence inférieur,
- la figure 5A illustre la sélection d'une vignette pour une extraction de son groupe et la figure 5B illustre la nouvelle position de cette vignette dans un nouveau groupe, à titre d'exemple,
- la figure 5C illustre un exemple d'affichage de vignettes d'un même niveau d'arborescence seulement d'un menu,
- la figure 5D illustre un exemple d'agrandissement de la taille d'une vignette de la figure 5C, entrainant l'affichage de vignettes correspondant à des sous-rubriques d'un niveau d'arborescence inférieur,
- la figure 5E illustre un exemple pour lequel la taille de la vignette agrandie sur la figure 5D est différente,
- la figure 5F illustre un exemple de déplacement dans le sens horaire des vignettes de la figure 5E,
- la figure 6 illustre schématiquement les principales étapes d'un exemple de procédé au sens de l'invention, et
- la figure 7 illustre schématiquement un dispositif apte à mettre en oeuvre l'invention.

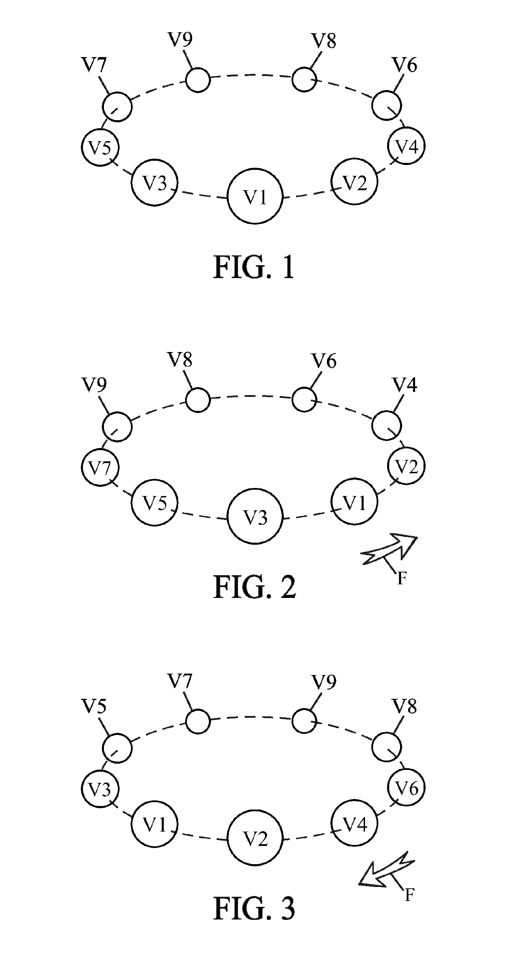

On se réfère tout d'abord à la figure 1 sur laquelle des vignettes V1 à V9 s'affichent dans une page d'écran d'une interface graphique. Ici, les vignettes présentent des formes circulaires (par exemple sphériques), bien que d'autres formes de vignettes puissent être envisagées, bien entendu.

L'indexation des vignettes représentées sur la figure 1 (V1 à V9) respecte un ordre d'importance (ou de pertinence) des contenus (ou fonctions informatiques ou rubriques de menus) associés à ces vignettes. Ainsi, dans l'exemple représenté, la vignette V1 est associée au contenu le plus pertinent et la vignette V9 est associée au contenu le moins pertinent.

Ainsi, un utilisateur, en découvrant les différentes vignettes, par exemple associées à des rubriques d'un menu, observe a priori les vignettes des rubriques les plus pertinentes, dans un premier temps (V1, V2, V3). Dans l'exemple représenté, le niveau de détail des premières vignettes en avant-plan (V1, V2, V3) est supérieur au niveau de détail d'affichage dans les vignettes V8 et V9. Par exemple, des titres de texte, avec du texte, peuvent être affichés dans les vignettes V1, V2 et V3, alors que seuls des titres sont affichés dans les vignettes V8 et V9.

On a représenté sur la figure 2 de nouvelles positions qu'occupent les vignettes lorsque l'utilisateur fait déplacer l'une des vignettes V1 à V9 (par exemple la vignette V1) dans un sens antihoraire. Pour un déplacement d'un seul « cran », la vignette V3 vient prendre la position de la vignette V1, laquelle vient prendre la position de la vignette V2, et ainsi de suite, selon une permutation circulaire avec rotation des positions des vignettes (d'un pas angulaire correspondant à un tour complet divisé par le nombre de vignettes affiché). Bien entendu, le déplacement de vignettes peut être discret (par pas) ou encore continu.

On a représenté sur la figure 3 un déplacement de vignettes dans le sens horaire (flèche F) et la vignette V2 vient occuper l'ancienne position de la vignette V1, laquelle vient occuper l'ancienne position de la vignette V3, et ainsi de suite, selon une permutation circulaire avec rotation des positions des vignettes. Dans les exemples représentés, les déplacements suivent une trajectoire elliptique correspondant, avec un effet 3D, à un déplacement circulaire sur la surface d'une sphère, suggérant une révolution de planète autour d'un axe.

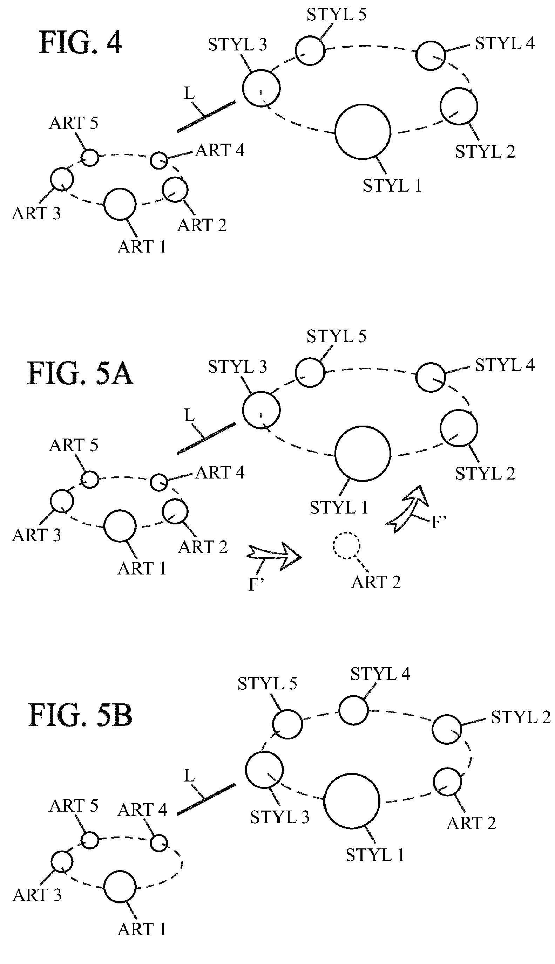

On se réfère maintenant à la figure 4 sur laquelle cinq vignettes STYL1 à STYL5 correspondant à des rubriques d'un menu sont affichées sur une page d'écran. Dans l'exemple représenté, un utilisateur sélectionne l'une de ces vignettes STYL3 pour afficher des vignettes correspondant à des sous-rubriques de la rubrique associée à la vignette STYL3. Lorsque l'utilisateur sélectionne cette vignette STYL3, par exemple par double-click, il s'affiche les vignettes ART1 à ART5 comme un « nouveau système solaire » découlant par le lien L de la vignette STYL3. Ici encore, un effet tridimensionnel appliqué aux vignettes ART1 à ART5 fait représenter en premier-plan la vignette ART1 dont le contenu est le plus pertinent.

On comprendra alors que l'affichage sur écran de telles vignettes peut représenter différents « systèmes solaires » reliés entre eux par des liens L, signifiant un niveau différent d'arborescence entre rubriques. Ici, les vignettes STYL1 à STYL5 correspondent à des rubriques d'un niveau d'arborescence donné, tandis que les vignettes ART1 à ART5 correspondent à des sous-rubriques d'un niveau d'arborescence inférieur. Dans l'exemple représenté, il peut s'agir de rubriques principales associées respectivement aux vignettes STYL1 à STYL5, correspondant à des styles musicaux différents (par exemple « rock », « indépendant », « soul », etc.). Dans un style musical donné correspondant à la vignette STYL3, plusieurs artistes ART1 à ART5 peuvent être répertoriés. En revanche, d'autres artistes peuvent être répertoriés comme sous-rubriques d'un style musical différent (par exemple, STYL1, STYL2, STYL4 ou STYL5).

En référence maintenant à la figure 5A, l'utilisateur sélectionne une vignette associée à une sous-rubrique, dans l'exemple représenté, pour la désassocier des sous-rubriques du même niveau d'arborescence. Par exemple, l'utilisateur peut sélectionner la vignette ART2 et la déplacer (par exemple par une fonctionnalité de type « drag and drop » représentée par les flèches F' de la figure 5A) pour la supprimer du groupe de vignettes ART1 à ART5.

Dans le menu, la sous-rubrique correspondante est supprimée de ce groupe de sous-rubriques.

Dans l'exemple représenté sur la figure 5A, cette sous-rubrique, correspondant à un artiste « ART2 », peut être déplacée par exemple en raison du fait que le style musical de cet artiste ART2 ne correspond pas à la rubrique représentée par la vignette STYL3. Par exemple, si l'utilisateur juge que le style musical de l'artiste ART2 n'est pas correctement défini par les styles STYL1 à STYL5, il peut, dans l'exemple représenté, classer l'artiste ART2 en tant que style musical en soi. Cette situation est représentée sur la figure 5B, dans laquelle l'utilisateur a placé librement la vignette associée à l'artiste ART2, entre les styles musicaux STYL1 et STYL2. Une telle manipulation permet alors de désassocier une sous-rubrique de son niveau d'arborescence et de placer cette sous-rubrique dans un autre niveau d'arborescence, par exemple supérieur, comme représenté dans l'exemple de la figure 5B.

On comprendra alors qu'avantageusement, bien que les vignettes soient présentées dans un ordre logique prédéterminé, l'interface offre une souplesse à l'utilisateur pour modifier cet ordre logique, selon son propre choix. Il peut aussi créer des liens entre contenus (ou fonctions informatiques) en rapprochant les vignettes correspondantes.

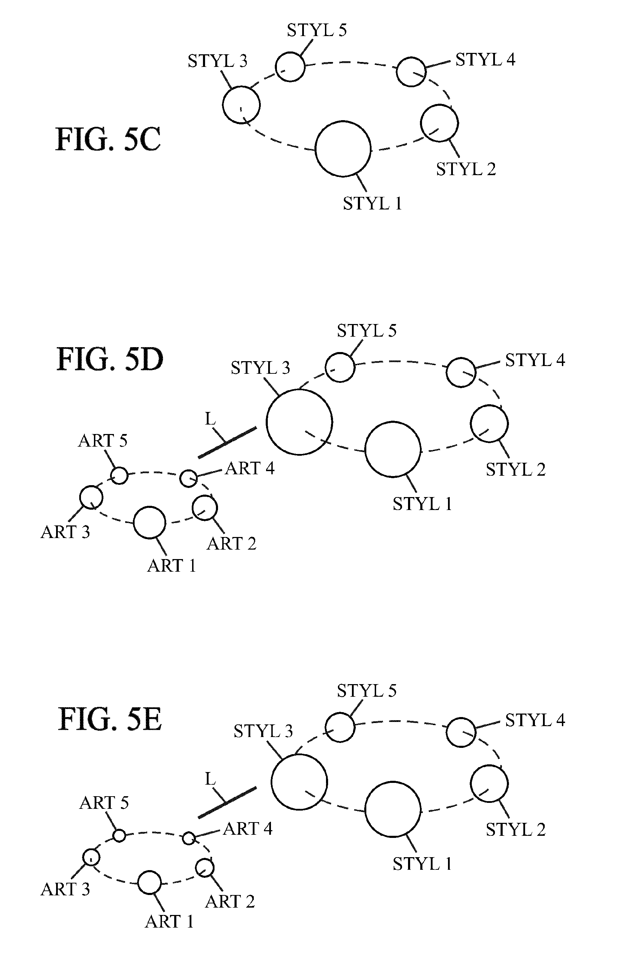

On se réfère maintenant à la figure 5C qui illustre une représentation des vignettes d'un même niveau d'arborescence seulement. Ainsi, en reprenant l'exemple présenté sur la figure 4, l'utilisateur ne sélectionne pas ici de vignette particulière parmi les vignettes STYL1 à STYL5. En référence maintenant à la figure 5D, l'utilisateur effectue une action pour demander un agrandissement de la taille d'une vignette de son choix (STYL3 dans l'exemple représenté), afin de donner une importance plus grande à cette vignette par rapport aux autres vignettes. On a alors représenté sur la figure 5D une vignette STYL3 (vignette choisie par l'utilisateur parmi le groupe de vignettes STYL1 à STYL5) agrandie, de taille supérieure à celle de la vignette STYL1 en premier plan et supérieure à la taille initiale de la vignette STYL3 illustrée précédemment sur la figure 5C. Lors des déplacements des vignettes sur la trajectoire, les tailles relatives des vignettes, telles que définies après agrandissement, sont conservées indépendamment de ces déplacements, et, plus généralement, indépendamment de la position des vignettes dans l'espace.

Avantageusement, une telle réalisation permet de donner plus d'importance à la vignette STYL3 choisie par l'utilisateur. La vignette STYL3 est alors mise en évidence parmi le groupe de vignettes STYL1 à STYL5 quelle que soit sa position dans la trajectoire ou dans l'espace. Elle peut donc être facilement distinguée des autres vignettes par l'utilisateur, quel que soit le déplacement appliqué aux vignettes de même niveau hiérarchique sur la trajectoire.

Dans une variante avantageuse de cette réalisation, l'agrandissement de la taille de la vignette STYL3 provoque en outre l'affichage d'informations supplémentaires sur cette vignette et/ou l'apparition de vignettes ART1 à ART5 d'un niveau d'arborescence inférieur et dépendantes hiérarchiquement de la vignette STYL3 (découlant par le lien L de la vignette STYL3). Ainsi, la représentation (figure 5D) de la vignette STYL3 à laquelle l'utilisateur a conféré une importance particulière en agrandissant sa taille, présente des informations supplémentaires par rapport à la représentation (figure 5C) de cette même vignette avant agrandissement.

En référence à la figure 5E, on a représenté une variante de l'exemple illustré à la figure 5D pour laquelle l'utilisateur définit par exemple une taille de vignette STYL3 sensiblement égale à la taille de la vignette STYL1 en premier plan. La variation de taille des vignettes ART1 à ART5 ― qui sont hiérarchiquement dépendantes de la vignette STYL3 - est proportionnelle à la variation de taille demandée par l'utilisateur à la vignette STYL3. En l'occurrence ici, l'utilisateur effectue une action pour demander une réduction de taille de la vignette STYL3 par rapport à la taille de cette même vignette sur la figure 5D. Ainsi, par variation proportionnelle, les vignettes ART1 à ART5 sur la figure 5E sont illustrées avec des tailles inférieures à leurs tailles représentées précédemment sur la figure 5D.

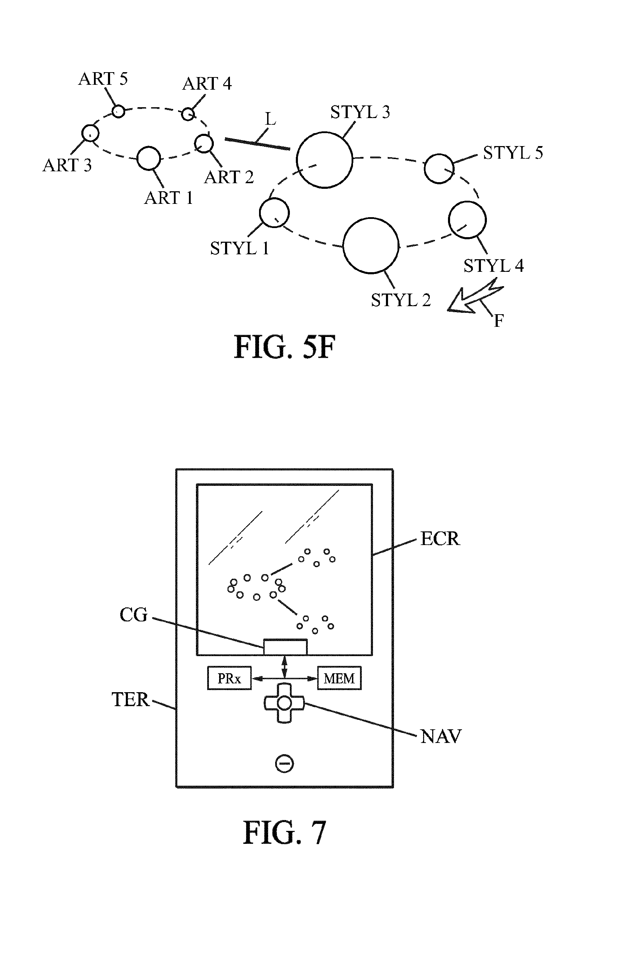

On se réfère maintenant à la figure 5F où on illustre un groupe de vignettes après un déplacement dans le sens horaire (flèche F) initié par l'utilisateur suite à un agrandissement de la vignette STYL3. On relèvera qu'il s'affiche alors des informations associées (par exemple ici, les vignettes ART1 à ART5 s'affichent, ou bien des informations sont affichées à l'intérieur même de la vignette STYL3) quelle que soit la position de la vignette STYL3 dans la trajectoire. Ainsi, l'utilisateur a une visibilité constante des informations associées à la vignette à laquelle il a conféré de l'importance.

Lorsqu'on simule pour les vignettes des déplacements dans un espace en trois dimensions et qu'un effet de perspective est appliqué aux vignettes représentées (en diminuant la taille des vignettes les plus lointaines et en augmentant la taille des vignettes les plus proches), cet effet de perspective se combine aux modifications de taille appliquées aux vignettes de manière à ce que la taille d'une vignette reste représentative de l'importance relative donnée à cette vignette par rapport aux autres vignettes.

La taille de la vignette est alors déterminée en fonction de :
- sa position dans l'espace au moment où une modification de taille lui a été appliquée ;
- la taille de la vignette après cette modification ;
- le déplacement relatif de la vignette par rapport à cette position.

Dans une variante de réalisation, la taille d'une vignette est toujours supérieure à une taille minimale donnée pour garantir qu'elle soit toujours suffisamment visible quelle que soit sa position dans l'espace.

Une modification de taille de vignette peut en outre être demandée par l'utilisateur pour toutes les vignettes visibles, notamment celles les plus éloignées afin de régler la taille des vignettes éloignées à une taille minimale qui lui convient.

Toutefois, dans le cas où aucun effet de perspective n'est appliqué aux vignettes et trajectoire, une vignette agrandie conserve la taille appliquée par l'utilisateur pour toute position dans la trajectoire et pour toute position dans l'espace en cas de déformation de la trajectoire. Par exemple, sur la figure 5F, on a représenté la vignette STYL3 à une nouvelle position après un déplacement dans le sens horaire. Toutefois, la vignette STYL3 garde ici la même taille que celle qui lui a été appliquée avant déplacement (taille appliquée à l'exemple présenté sur la figure 5E).

En outre, on rappelle que la modification de la taille peut être demandée par l'utilisateur ou déterminée et appliquée automatiquement par un module applicatif. A titre d'exemple purement illustratif, l'utilisateur écoute par exemple un morceau de musique de l'artiste représenté par la vignette ART1 découlant du style musical représenté par la vignette STYL3. Dans le cadre de cet exemple, le module applicatif modifie la taille de la vignette STYL3 (agrandissement de la vignette) et affiche le groupe de vignettes ART1 à ART5 avec ART1 en premier plan. Ainsi, l'utilisateur peut se déplacer dans le groupe de vignettes STYL1 à STYL5 en gardant une visibilité et une accessibilité aux informations importantes, en l'occurrence ici, les informations relatives au morceau de musique que l'utilisateur écoute (STYL3 et ART1).

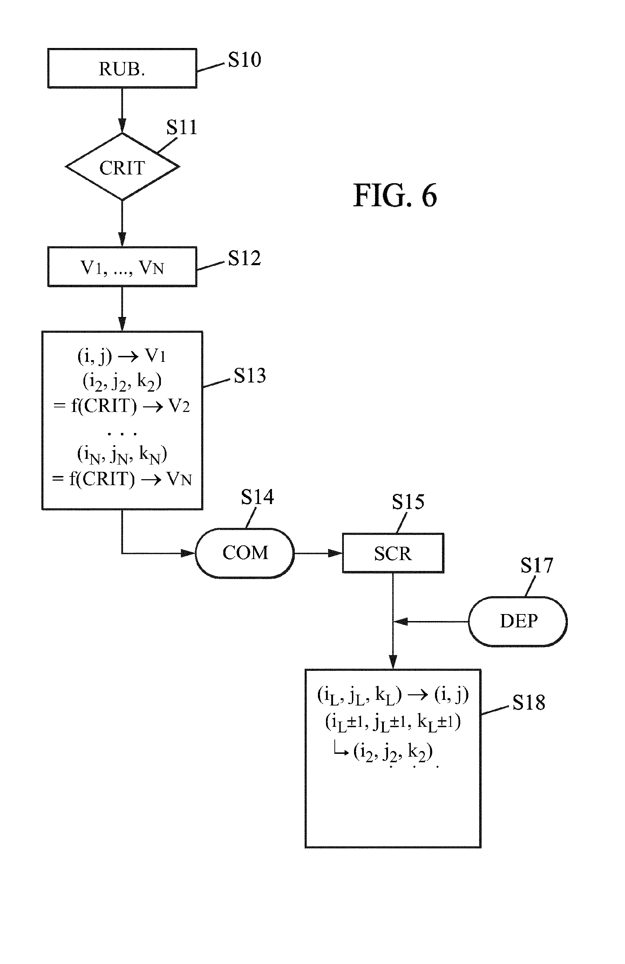

On a représenté sur la figure 6 un exemple de réalisation des étapes d'un procédé au sens de l'invention. Lors d'une première étape S10, les définitions de rubriques de menu, par exemple, sont définies auprès d'un dispositif de traitement de données d'interface graphique. Ces rubriques sont hiérarchisées selon un critère de pertinence prédéfini (étape S11). En particulier, à l'étape S12, le dispositif de traitement prépare un signal de commande pour l'affichage de vignettes V1 à VN, ces vignettes correspondant respectivement aux rubriques ordonnées selon le critère de tri de l'étape S11. A l'étape S13, la vignette V1 associée à la rubrique la plus pertinente est définie comme devant occuper une position de coordonnées i,j, sur un écran. Ensuite, la vignette V2 associée à une rubrique immédiatement moins pertinente, selon le critère de tri, doit occuper une position de coordonnées i₂,j₂,k₂, ces coordonnées étant définies en fonction du critère de tri (par exemple immédiatement à droite de la vignette centrale V1). En outre, la troisième coordonnée k₂ définit ainsi un effet tridimensionnel avec, en particulier, un effet d'éloignement (vers le fond de l'écran), par rapport à la vignette V1. La troisième coordonnée k₂ dépend donc directement du critère de pertinence de la rubrique associé à la vignette V2 (et éventuellement aussi du nombre de vignettes que doit comporter le groupe V1 à VN). Une fois que toutes les positions de toutes les vignettes V1 à VN ont été déterminées à l'issue de l'étape S13, un signal de commande est construit à l'étape S 14 pour alimenter un écran, en vue d'un affichage de ces vignettes à l'étape S 15.

Par la suite, si l'utilisateur souhaite déplacer les vignettes (par exemple, mettre en avant une vignette VL), l'utilisateur peut piloter une souris, un stylet graphique, ou utiliser ses doigts pour une interface tactile (étape S17), et positionner alors la vignette VL d'anciennes coordonnées si_{L},j_{L},k_{L}, en position centrale de coordonnées i,j (ancienne coordonnées de la vignette V1). Cette opération créé alors un déplacement des vignettes et la vignette suivante VL+1 (ou la vignette VL-1, selon le sens du déplacement) occupe alors l'ancienne position de la vignette V2, selon les coordonnées i₂,j₂,k₂ (étape S18), et ainsi de suite, selon une permutation circulaire.

On comprendra alors que la succession d'étapes illustrée sur la figure 6 peut représenter l'organigramme d'un algorithme général d'un programme informatique au sens de l'invention.

Par ailleurs, on a représenté schématiquement sur la figure 7 un dispositif comportant des moyens de traitement graphique pour la mise en oeuvre de l'invention. Dans l'exemple représenté, il s'agit d'un terminal de téléphonie mobile comportant un écran ECR, ainsi que des moyens de traitement graphique, par exemple un processeur PROC et une mémoire de travail MEM capables de coopérer ensemble pour piloter une carte graphique CG recevant un signal de commande d'affichage sur l'écran ECR. L'écran ECR peut être de type tactile, ou encore on peut prévoir des boutons de navigation NAV pour sélectionner, déplacer, associer/désassocier, des vignettes d'un groupe.

Bien entendu, d'autres fonctionnalités sont possibles. Par exemple, une interface utilisateur peut permettre de « zoomer » une vue sur une vignette, de manière à obtenir plus de détails d'information, par exemple, ou encore une meilleure résolution d'image. En tout état de cause, cette fonction de zoom permet d'agrandir les dimensions apparentes de la vignette.

Par ailleurs, on a décrit ci-avant des vignettes présentes à l'affichage dans un groupe donné. Néanmoins, dans une variante, il peut être possible de zoomer sur un groupe de vignettes et de faire alors apparaître des vignettes de ce groupe qui n'étaient pas affichées avant le zoom (et donc qui disparaissent de l'écran après une fonction de « dé-zoom »).

En outre, comme les vignettes peuvent être représentées par des sphères, il est possible d'obtenir un contenu informatif supplémentaire affiché sur une vignette en simulant une rotation de cette vignette sur elle-même (de sorte qu'une face cachée d'une vignette présente alors, après rotation, de nouvelles informations).

En outre, il peut être prévu un système planétaire particulier (par exemple, quelques vignettes en bas d'écran, pour naviguer plus facilement d'une page d'écran à l'autre, comme par exemple pour revenir à un menu d'accueil ou autre, ou encore pour une recherche ciblée de nouvelles rubriques, ou autres).

Ainsi, la présente invention confère à l'utilisateur un effet d'immersion dans une réalité virtuelle. Il peut par exemple agencer des objets graphiques (personnages virtuels d'avatars, ou autres) dans un environnement (par exemple autour d'une table de conférence) selon un ordre de disposition qu'il peut choisir.

Bien entendu, la présente invention ne se limite pas à la forme de réalisation décrite ci-avant à titre d'exemple ; elle s'étend à d'autres variantes.

Ainsi, il a été décrit précédemment un agencement de vignettes selon un trajet elliptique sur une sphère dans l'espace 3D. En variante, elles peuvent être disposées simplement sur un cercle (trajet de la sphère vu de dessus en 2D), ou encore elles peuvent être disposées sur une ligne (tel un arc de cercle vu de profil à plat), auquel cas une vignette en fin de ligne, sortante par déplacement, passe en début de ligne, par permutation circulaire. Dans une telle réalisation, la vignette en milieu de ligne par exemple peut être de plus grande taille que les vignettes de bout de ligne.

Enfin, on a représenté notamment sur les figures 4, 5A et 5B deux niveaux d'arborescence de menu par des vignettes de tailles similaires : STYL1 à STYL5 d'une part, et ART1 à ART5 d'autre part. Toutefois, dans une réalisation plus sophistiquée, les vignettes ART1 à ART5 correspondant aux sous-rubriques de la rubrique associée à la vignette STYL3 sont représentées autour de la vignette STYL3 avec des tailles d'affichage plus petites (telles des planètes gravitant autour d'un astre correspondant à la vignette STYL3). Toutefois, par souci de clarté des figures, une telle réalisation n'est pas illustrée.

## Revendications

1. Procédé de traitement de données d'interface graphique, mis en oeuvre par un dispositif informatique (TER), dans lequel on génère un signal de commande d'affichage sur un écran d'une interface graphique à base de vignettes, au moins une vignette représentant un ensemble, d'au moins un contenu et/ou au moins une fonction informatique accessible à partir de ladite vignette,
**caractérisé en ce que** :
- toutes les vignettes (V1, ..., V9) d'un groupe de vignettes s'affichent ensemble sur l'écran (S13, S15), et
- la sélection d'une vignette d'un groupe pour un déplacement à l'écran provoque un déplacement des autres vignettes (S18) dudit groupe, dans un même sens de déplacement (F) le long d'une trajectoire fermée.

2. Procédé selon la revendication 1, **caractérisé en ce que** les vignettes sont représentées dans un espace tridimensionnel et **en ce que**, selon la position occupée par une vignette dans cet espace tridimensionnel, le mode de représentation de cette vignette varie.

3. Procédé selon la revendication 2, **caractérisé en ce qu'**une variation du mode de représentation d'une vignette est obtenue en modifiant la quantité et/ou la nature des informations affichées sur l'ensemble associé à cette vignette.

4. Procédé selon l'une des revendications 2 et 3, **caractérisé en ce qu'**une variation du mode de représentation d'une vignette donnée est obtenue en affichant des sous-vignettes de ladite vignette donnée, les sous-vignettes formant un autre groupe de vignettes de niveau hiérarchique inférieur au groupe d'appartenance de la vignette donnée.

5. Procédé selon l'une des revendications précédentes, **caractérisé en ce que** ladite trajectoire est représentée dans un espace tridimensionnel et la position d'une vignette sur ladite trajectoire étant d'autant plus proche d'un avant-plan dudit espace tridimensionnel que l'ensemble de cette vignette a un degré de pertinence plus élevé relativement à un critère choisi.

6. Procédé selon l'une des revendications précédentes, **caractérisé en ce qu'**une distance relative séparant deux vignettes sur ladite trajectoire est modifiable par un utilisateur de l'interface.

7. Procédé selon l'une des revendications précédentes, **caractérisé en ce qu'**il comprend une étape de recherche de contenus répondant à un critère et une étape de création et d'affichage d'une vignette représentant un ensemble de contenus obtenu suite à ladite étape de recherche.

8. Procédé selon l'une des revendications précédentes, **caractérisé en ce qu'**il comprend une étape de recherche de contenus répondant à un critère de recherche, les vignettes dudit groupe représentant un ensemble de contenus obtenu suite à ladite étape de recherche, ladite trajectoire étant représentée dans un espace tridimensionnel et la position d'une vignette sur ladite trajectoire étant d'autant plus proche d'un avant-plan dudit espace tridimensionnel que l'ensemble d'au moins un contenu que cette vignette représente a un degré de pertinence plus élevé relativement audit critère de recherche.

9. Procédé selon l'une des revendications précédentes, **caractérisé en ce que**, en réponse à une action d'un utilisateur, au moins deux vignettes sont transformées en une vignette unique, et les ensembles associés à ces deux vignettes sont fusionnés.

10. Procédé selon l'une des revendications précédentes, **caractérisé en ce que**, en réponse à une action prédéfinie d'un utilisateur, au moins une vignette, associée à un ensemble prédéfini d'au moins un contenu et/ou au moins une fonction informatique, est affichée et insérée dans un groupe de vignettes couramment affiché.

11. Procédé selon l'une des revendications précédentes, **caractérisé en ce que** ladite trajectoire est définie dans un espace tridimensionnel représenté dans ladite interface graphique, et **en ce que** la taille d'une vignette est modifiable indépendamment de sa position dans ledit espace tridimensionnel.

12. Procédé selon l'une des revendications précédentes, **caractérisé en ce que** la nature et/ou la quantité des actions possibles sur une vignette est fonction de la taille de ladite vignette.

13. Procédé selon l'une des revendications précédentes, **caractérisé en ce que** la représentation d'une vignette est modifiable par choix, la nature et/ou la quantité des actions possibles sur une vignette étant lié au type de représentation choisi.

14. Procédé selon l'une des revendications précédentes, **caractérisé en ce que** les vignettes (STYL1, .., STYL5) correspondent à des rubriques de menu, et **en ce que** les vignettes d'un même groupe correspondent à toutes les rubriques d'un même niveau d'arborescence du menu, et **en ce que** la sélection d'une vignette pour une consultation de sous-rubriques d'un niveau d'arborescence inférieur du menu, provoque l'affichage de toutes les vignettes (ART1, ..., ART5) associées respectivement auxdites sous-rubriques, et **en ce qu'**une sélection pour un déplacement d'une vignette associée à une sous-rubrique provoque un déplacement des autres vignettes associées auxdites sous-rubriques le long d'une trajectoire fermée.

15. Programme d'ordinateur comportant des instructions pour la mise en oeuvre du procédé selon l'une des revendications 1 à 14, lorsque ce programme est exécuté par un processeur.

16. Dispositif de traitement de données d'interface graphique, comportant des moyens pour générer un signal de commande d'affichage sur un écran d'une interface graphique à base de vignettes, au moins une vignette représentant un ensemble, d'au moins un contenu et/ou au moins une fonction informatique accessible à partir de ladite vignette, **caractérisé en ce qu'**il comporte des moyens de traitement graphique pour :
- afficher ensemble sur l'écran toutes les vignettes (V1, ..., V9) d'un groupe de vignettes (S13, S15), et
- sur sélection d'une vignette d'un groupe pour un déplacement à l'écran, provoquer un déplacement des autres vignettes (S18) dudit groupe, dans un même sens de déplacement (F) le long d'une trajectoire fermée.
